Europäisches Patentamt

European Patent Office

Office européen des brevets

(19)

(11) Numéro de publication : **0 077 225 B1**

(12) **FASCICULE DE BREVET EUROPÉEN**

(45) Date de publication du fascicule du brevet :
30.10.85

(51) Int. Cl.⁴ : **B 29 C 45/14**, B 65 D 1/48, B 65 D 6/34

(21) Numéro de dépôt : 82401605.9

(22) Date de dépôt : 30.08.82

(54) Procédé permettant d'enrober hermétiquement les armatures d'une pièce en matière plastique armée intérieurement et pièces obtenues selon ce procédé.

(30) Priorité : 18.09.81 FR 8117615

(43) Date de publication de la demande :
20.04.83 Bulletin 83/16

(45) Mention de la délivrance du brevet :
30.10.85 Bulletin 85/44

(84) Etats contractants désignés :
AT CH LI NL

(56) Documents cités :
EP-A- 0 022 043
DE-B- 1 255 290
FR-A- 1 440 870
FR-A- 1 502 217

(73) Titulaire : ALLIBERT S.A. Société anonyme dite:
129, avenue Léon Blum
F-38042 Grenoble Cedex (FR)

(72) Inventeur : Hemery, André
25, domaine de la Courcanne
F-27700 Les Andelys (FR)

(74) Mandataire : Lerner, François
5, rue Jules Lefebvre
F-75009 Paris (FR)

## Description

La présente invention a pour objet un procédé permettant d'enrober hermétiquement les armatures d'une pièce en matière plastique armée intérieurement et se rapporte aux pièces en plastique armé ainsi obtenues.

Pour diverses applications, notamment pour constituer des caisses destinées à recevoir de lourds chargements ou pour constituer des palettes de manutention, les matières plastiques usuelles, même de bonne qualité, présentent une rigidité et une résistance sous charge insuffisantes. Une solution adoptée consiste à armer ces pièces au moyen d'armatures internes.

Ainsi, dans le brevet antérieur déposé au nom du même demandeur EP-A1-0 022 043, on a décrit des pièces en matière plastique armées intérieurement au moyen d'armatures en bois. Le procédé décrit dans cette demande antérieure s'applique du reste tout aussi bien si les armatures sont d'une autre nature, par exemple en métal.

Le problème de fabrication qui se pose est de surmouler la matière plastique sur l'armature. A priori, cela pourrait ne pas poser de problèmes de fabrication, s'il n'existait des retraits très importants de la matière plastique lorsqu'elle se refroidit après avoir été surmoulée sur l'armature. Or, les matières plastiques résistantes aux chocs que l'on utilise pour de telles pièces, par exemple le polyéthylène haute densité sont très sujettes à fissuration sous contrainte ou présentent d'autres inconvénients. En conséquence, on a proposé d'enrober l'armature par d'autres moyens qu'un surmoulage unique. Ainsi, selon le brevet précédemment mentionné, on forme dans la matière plastique résistante aux chocs qui reçoit l'armature des canaux ouverts dans lesquels les armatures sont positionnées. Après quoi, on vient fermer l'ouverture du canal en moulant, sur l'armature et une partie des parois extérieures du canal, une matière non sujette à fissuration sous contrainte. Celle-ci pouvant ne pas être suffisamment soudée aux parois extérieures du canal, on obtient, en plus du serrage de retrait, une liaison mécanique entre armature, canal et pièce surmoulée en prévoyant des gorges rainurées dans l'armature et des orifices en regard prévus dans les canaux de façon à obtenir une certaine liaison de la pièce rapportée avec l'armature et à travers les canaux qui l'entourent grâce à des pions de liaison et de verrouillage.

On connaît également, par exemple du document DE-B-1 255 290, un procédé de fusion, par thermosoudure entre elles, de diverses pièces constituées en un même matériau plastique, pour la réalisation d'extrémités élargies de tubes.

La présente invention a pour objet d'offrir un autre moyen d'enrobage de l'armature et de liaison de l'ensemble et de garantir l'étanchéité des cavités où sont incluses les armatures. Elle concerne un procédé permettant d'obtenir l'étanchéité totale d'une pièce en matière plastique résistante aux chocs, armée intérieurement d'armatures en particulier en bois, devant être mises à l'abri des intempéries, pièce dans laquelle l'armature est insérée préalablement dans un canal ouvert, permettant son introduction et sa mise en place dans la pièce, le procédé se caractérisant selon l'invention en ce qu'après mise en place de l'armature dans ledit canal, on chauffe sur une profondeur comprise entre un quart et trois quarts de leur épaisseur, les parois externes du canal au voisinage de son ouverture, après quoi, lorsque leur fusion est suffisante, on vient injecter sous pression contre ces parois un matériau plastique compatible pouvant se thermosouder sur lesdites parois et peu sensible à la fissuration sous contraintes. De cette façon, on résout le double problème de l'étanchéité et de la fissuration sous contraintes, lorsque l'on veut éviter le surmoulage direct de l'ensemble de la pièce sur l'armature, en vue notamment d'élargir le choix de matières plastiques utilisables.

L'invention vise également des pièces, et en particulier des caisses et palettes, fabriquées conformément à ce procédé.

L'invention et sa mise en œuvre apparaîtront plus clairement à l'aide de la description qui va suivre, faite en référence aux dessins annexés dans lesquels :

La figure 1 est une vue en perspective faite avec arrachement partiel, montrant un coffre moulé en matière plastique comportant des armatures en bois,

La figure 2 montre à plus grande échelle le détail de fermeture d'un canal dans lequel a été insérée une armature en bois conformément à l'art antérieur,

la figure 3 montre en coupe et schématiquement comment on prépare la partie de la pièce comprenant un canal et l'armature en bois en vue de la fermeture étanche du canal,

La figure 4 montre en coupe, comme à la figure 3, comment se présente la pièce lorsque le canal contenant l'armature est fermé de façon étanche,

La figure 5 montre en deux demi-coupes comme les figures 3 et 4, une autre variante d'exécution du procédé.

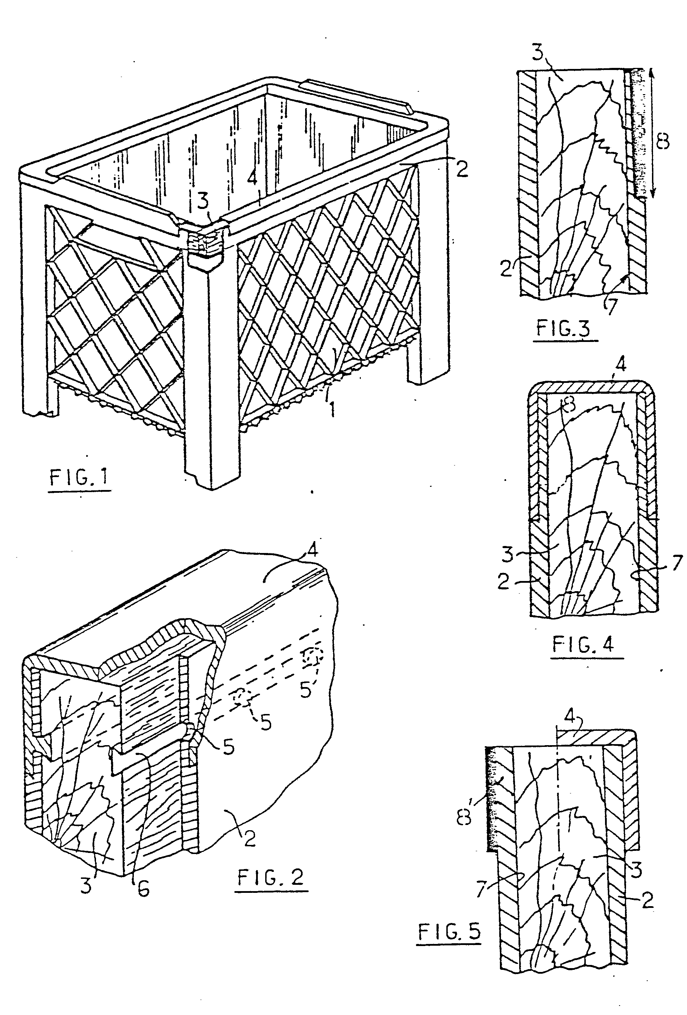

On fera tout d'abord référence à la figure 1 dans laquelle on a illustré à titre d'exemple l'application du procédé de l'invention à une pièce en matière plastique armée intérieurement d'armatures en bois formant une caisse. La caisse, repérée 1 dans son ensemble, présente à sa partie supérieure un rebord 2 renforcé par une armature en bois 3. De façon plus précise, et comme décrit au brevet susmentionné EP-A1-0 022 043, les armatures 3 sont introduites dans des canaux ouverts vers le haut en forme de U formant la bordure supérieure plastique 2. De cette façon, les armatures 3 peuvent être introduites et mises en place dans la bordure 2 sans qu'il y ait de contrainte mécanique exercée sur cette bordure, qui peut être réalisée d'une seule pièce comme le reste de la caisse, en une matière plastique résistante aux chocs mais sensible à la fissuration sous contraintes, telle que du polyéthylène haute densité par exemple.

A ce stade de la fabrication, il faut fermer l'ouverture du canal que forme la bordure supérieure 2 et dans lequel est introduite l'armature 3, ce qui est obtenu par pose d'un couvercle 4 en matière plastique qui pourra être surmoulé par dessus la bordure 2. Pour constituer ce couvercle 4, on ne peut utiliser la même matière que celle utilisée pour le reste de la caisse, soit dans l'exemple indiqué du polyéthylène haute densité, car une telle matière surmoulée à chaud sur la bordure 2 et sur l'armature 3 serait sujette à fissuration du fait des contraintes qu'elle supporterait au moment du retrait s'opérant lors du refroidissement de la matière.

Pour résoudre ce problème de fissuration sous contraintes, le brevet ci-dessus mentionné préconisait, comme illustré à la figure 2, de surmouler le couvercle 4 en une matière plastique peu sujette à fissuration sous contraintes. Pour obtenir une bonne cohésion du couvercle 4 surmoulé à chaud sur la paroi 2 froide de la bordure supérieure de la caisse, on formait, d'endroit en endroit, des orifices 5 dans la paroi 2, lesquels orifices 5 venaient en regard d'une gorge à section en queue d'aronde 6 formée dans l'armature 3. Dans ces conditions, la matière moulée du couvercle 4 s'écoulait dans la gorge 6 et dans les orifices 5, assurant un bon verrouillage du couvercle par rapport à l'armature 3 et par rapport à la paroi 2.

On se reportera maintenant aux figures 3 et 4 dans lesquelles on a illustré la mise en œuvre de l'invention.

Conformément à l'invention, l'armature 3 étant en place dans la bordure supérieure 2 de la caisse, on vient chauffer extérieurement la paroi du canal 7, par exemple sur la hauteur 8 voisine de l'ouverture du canal 7 et sur une profondeur de préférence comprise entre un quart et trois quart, par exemple sensiblement moitié de l'épaisseur de cette partie, comme illustré en trait fort à la partie droite de la figure 3, de façon à ramollir la surface chauffée sur la profondeur indiquée.

Ce chauffage peut s'effectuer de toute façon appropriée, par exemple par rayonnement, ou encore selon le procédé connu dit au miroir, c'est-à-dire au moyen de lames chauffantes (non représentées) que l'on approche des parois 8, ou encore par la flamme ou par soufflage d'air chaud.

La matière thermoplastique étant ainsi ramollie et chauffée, on injecte rapidement, par surmoulage, la matière qui formera le couvercle 4, les deux matières se soudant et s'interpénétrant sur une légère profondeur dans la zone de fusion de hauteur 8 des parois 2. Ainsi, est obtenue une fermeture étanche du canal 7, assurant la mise à l'abri définitive de l'armature 3. A la figure 4, on note que la paroi de la pièce terminée ne présente pratiquement pas de surépaisseur.

Dans la variante de réalisation illustrée à la figure 5, la partie supérieure 8' du canal 7 présente initialement une surépaisseur par rapport à la paroi 2, de façon à conserver à la paroi 8 du canal après chauffage une épaisseur hachurée non fondue suffisante. Le mode d'assemblage est le même que celui décrit sur la figure 3. Dans ce cas, la paroi de la pièce terminée présente une certaine surépaisseur comme il apparaît dans la demi-coupe droite de la figure.

Pour obtenir les meilleurs résultats, on choisira des matières plastiques compatibles.

Par exemple, la plus grande partie de la pièce pourra être constituée en polyéthylène haute densité résistant très bien aux chocs. La matière du couvercle 4 pourra alors être constituée par un polyéthylène basse densité moins rigide mais peu sujet aux fissurations sous contraintes. Etant donné que le couvercle 4 est situé dans une partie de la caisse qui travaille peu, cela ne présentera pas d'inconvénients au niveau de la résistance de la caisse.

A la place du polyéthylène basse densité, on pourra également choisir d'autres matières telles par exemple qu'un polyéthylène moyenne densité, un polyéthyl vinyl acétate (EVA), un polyéthylène-éthyl acrylate (EEA), un mélange de ces composés ou analogue, tel qu'un copolymère d'éthylène et d'acide acrylique (EAA) par exemple.

Par exemple, de bons résultats ont été obtenus avec le couple de matériaux suivants :
polyéthylène haute densité pour la caisse/polyéthylène basse densité pour le couvercle,
polyéthylène haute densité pour la caisse/mélange 50/50 de polyéthylène basse densité et de EEA.

Comme polyéthylène basse densité, on peut prendre les produits Vestolen 3513 de Hüls, Hostalen GP 6250 de Hoechst, ou les produits similaires d'autres producteurs.

On peut également utiliser comme matériau de base pour la caisse un polypropylène d'un type résistant aux chocs, et comme matériau de fermeture également un polypropylène de même référence.

**Revendications**

1. Procédé permettant d'obtenir l'étanchéité totale d'une pièce en matière plastique résistante aux chocs, armée intérieurement d'armatures, en particulier en bois, devant être mises à l'abri des intempéries, pièce dans laquelle l'armature est insérée préalablement dans un canal ouvert permettant son introduction et sa mise en place dans la pièce, caractérisé en ce qu'après mise en place de l'armature (3) dans ledit canal (7), on chauffe sur une profondeur comprise entre un quart et trois quarts de leur épaisseur jusqu'à plastification les parois externes (8, 8') du canal au voisinage de son ouverture après quoi, lorsque la fusion est suffisante, on vient injecter sous pression contre ces parois un matériau plastique (4) compatible pouvant se thermosouder sur lesdites parois et peu sensible à la fissuration sous contraintes.

2. Procédé selon la revendication 1, caractérisé en ce qu'on effectue le chauffage desdites parois externes (8, 8') par rayonnement.

3. Procédé selon la revendication 1, caractérisé en ce qu'on effectue le chauffage desdites parois externes (8, 8') au moyen de lames chauffantes selon le procédé dit « au miroir ».

4. Procédé selon la revendication 1, caractérisé en ce qu'on effectue le chauffage desdites parois externes (8, 8') par une flamme.

5. Procédé selon la revendication 1, caractérisé en ce qu'on effectue le chauffage desdites parois externes (8, 8') par air chaud.

6. Procédé selon l'une des revendications précédentes, caractérisé en ce qu'on utilise comme matériau de base de la pièce un polyéthylène haute densité ou analogue, résistant aux chocs, et comme matériau de fermeture étanche des canaux un polyéthylène basse densité ou moyenne densité, un polyéthyl vinyle acétate (EVA), un polyéthylène-éthyl acrylate (EEA), un copolymère d'éthylène et d'acide acrylique (EAA), un mélange de ces composés ou analogue.

7. Procédé selon l'une des revendications 1 à 5, caractérisé en ce qu'on utilise comme matériau de base un polypropylène d'un type résistant aux chocs, et comme matériau de fermeture également un polypropylène de même référence.

8. Pièces en matériau plastique pourvues d'armatures, en particulier en bois, noyées de façon étanche dans la matière plastique, obtenues selon le procédé de l'une quelconque des revendications précédentes, caractérisées en ce qu'elles comportent des jonctions étanches obtenues par thermosoudure d'une matière plastique résistante aux chocs formant la plus grande partie d'enrobage des pièces, et d'une matière plastique différente, compatible, peu sujette aux fissurations sous contraintes, fermant les ouvertures formées dans les pièces pour la mise en place des armatures.

## Claims

1. Process allowing to obtain the total imperviousness of an article of shock resistant plastics material internally reinforced by frame members, notably of wood, which are to be protected from the weather, in which article the frame member is inserted in advance into an open channel which allows it to be introduced and positionned within the article, characterized in that after positioning of the frame member (3) within the said channel (7), the external walls (8, 8') of the channels are heated over a depth comprised between a quarter and three quarters of their thickness until softening in the neighbourhood of the channel opening after which, when the softening is sufficient, there is injected under pressure onto these walls a compatible plastics material (4) which becomes heat-welded on the said walls, the compatible plastics material being scarcely susceptible to cracking under strain.

2. Process according to claim 1, characterized in that the heating of the said external walls (8, 8') is carried out by radiation.

3. Process according to claim 1, characterized in that the heating of the said external walls (8, 8') is carried out by the « au miroir » method.

4. Process according to claim 1, characterized in that the heating of the said external walls (8, 8') is carried out by means of a flame.

5. Process according to claim 1, characterized in that the heating of the said external walls (8, 8') is carried out by means of hot air.

6. Process according to any of the preceding claims, characterized in that there is used as the base material for the article a high density polyethylene or the like which is resistant to shock and as the compatible plastics material for impervious sealing of the channel a low or medium density polyethylene, polyethyl vinyl acetate (EVA), polyethylene ethyl acrylate (EEA), a copolymer of ethylene and acrylic acid (EAA), a mixture of these compounds or the like.

7. Process according to any one of claims 1 to 5, characterized in that as base material, there is used a shock resistant type of polypropylene and as sealing material also a polypropylene of the same reference.

8. Articles of plastics material provided with a frame member, notably of wood, sealed within the plastics material, obtained by the process of any of the preceding claims, characterized in that the article includes impervious joints obtained by the thermo-welding together of a shock resistant plastics material which forms the greater covering portion of the articles, and of a different but compatible plastics material which is scarcely susceptible to cracking under strain and seals the openings provided in the articles for the positioning of the frames.

## Patentansprüche

1. Verfahren zum vollständigen Abdichten eines Teiles aus Kunststoffmaterial, welches stoßfest und innen mit Armierungen verstärkt ist, insbesondere mit Armierungen aus Holz, bevor es wetterfest gemacht ist, wobei in diesem Teil die Armierung vorher in einen offenen Kanal eingeführt wird, der das Einführen und das An-den-Platzbringen der Armierung in dem Teil erlaubt, dadurch gekennzeichnet, daß nach dem Anordnen der Armierung (3) in dem Kanal (7) die Außenwände (8, 8') des Kanals in der Nachbarschaft seiner Öffnung auf eine Tiefe zwischen einem und drei Vierteln ihrer Dicke bis zum Erweichen erwärmt werden, wonach bei ausreichender Schmelze ein Kunststoffmaterial (4), welches sich auf diesen Wänden verschweißen kann und gegen Rißbildung unter Belastung wenig empfindlich ist, unter Druck gegen diese Wände verspritzt wird.

2. Verfahren nach Anspruch 1, dadurch gekennzeichnet, daß die Erwärmung der Außenwände (8, 8') durch Strahlung erfolgt.

3. Verfahren nach Anspruch 1, dadurch gekennzeichnet, daß die Erwärmung der Außenwände (8, 8') mittels Heizstreifen nach dem sogenannten « Spiegel »-Verfahren erfolgt.

4. Verfahren nach Anspruch 1, dadurch gekennzeichnet, daß das Erwärmen der Außenwände (8, 8') durch eine Flamme erfolgt.

5. Verfahren nach Anspruch 1, dadurch gekennzeichnet, daß das Erwärmen der Außenwände (8, 8') mit Hilfe heißer Luft erfolgt.

6. Verfahren nach einem der vorhergehenden Ansprüche, dadurch gekennzeichnet, daß man als Grundmaterial des Teiles ein Polyäthylen hoher Dichte oder dergleichen verwendet, welches gegen Stöße widerstandsfähig ist, und als abdichtendes Verschlußmaterial für die Kanäle ein Polyäthylen niedriger oder mittlerer Dichte, ein Polyäthylvinylacetat (EVA), ein Polyäthylenäthylacrylat (EEA), ein Copolymer des Äthylens und Acrylsäure (EAA) oder ein Gemisch dieser Verbindungen oder dergleichen verwendet.

7. Verfahren nach einem der Ansprüche 1 bis 5, dadurch gekennzeichnet, daß man als Grundmaterial ein Polypropylen der gegen Stöße widerstandsfähigen Art verwendet und als Verschlußmaterial ebenfalls ein Polypropylen derselben Art verwendet.

8. Mit Armierungen, insbesondere aus Holz, versehene Teile aus Kunststoffmaterial, wobei die Armierungen dichtend im Kunststoff verlegt sind, hergestellt nach dem Verfahren nach einem der vorhergehenden Ansprüche, dadurch gekennzeichnet, daß die Teile abdichtende Verbindungsstellen enthalten, welche durch Thermoschweißen eines gegen Stöße widerstandsfähigen Kunststoffmaterials erhalten sind, welches den größten Teil der Umhüllung der Teile bildet, und ein anderes, passendes Kunststoffmaterial enthalten, welches den Rißbildungen unter Belastung wenig unterworfen ist und die Öffnungen schließt, die in den Teilen zur Anbringung der Armierungen gebildet sind.

FIG.1

FIG.2

FIG.3

FIG.4

FIG.5